# EUROPÄISCHE PATENTSCHRIFT

(11) **EP 3 461 662 B1**
(45) Veröffentlichungstag und Bekanntmachung des Hinweises auf die Patenterteilung: **09.02.2022**
(21) Anmeldenummer: 18196483.4
(22) Anmeldetag: 25.09.2018
(51) Int. Cl.: B60G 17/019

(54) **DÄMPFUNGSVORRICHTUNG UND WARTUNGSSTAND MIT AUSWERTEEINHEIT**
DAMPING DEVICE AND MAINTENANCE STATION WITH EVALUATION UNIT
DISPOSITIF D'AMORTISSEMENT ET STATION DE MAINTENANCE AVEC UNITE D'EVALUATION

(30) Priorität: 27.09.2017 AT 508272017
(43) Veröffentlichungstag der Anmeldung: 03.04.2019
(73) Patentinhaber: Siemens AG Österreich, 1210 Wien (AT)
(72) Erfinder: Faethe, Tobias, 8073 Feldkirchen bei Graz (AT); Heiling, Wolfgang, 8265 Gersdorf an der Feistritz (AT); Hladik, Reinhard, 1210 Wien (AT); Pangerl, Sabine, 8200 Gleisdorf (AT); Schiefer, Martin, 3100 St. Pölten (AT)
(74) Vertreter: Maier, Daniel Oliver

(56) Entgegenhaltungen:
- EP-A2- 0 563 713
- DE-A1- 10 326 675
- DE-A1- 19 934 263
- US-A1- 2010 225 527
- US-A1- 2011 084 503
- US-A1- 2014 175 763

## Beschreibung

Die Erfindung betrifft eine Dämpfungsvorrichtung und Wartungsstand mit Auswerteeinheit, nach dem Oberbegriff des Anspruchs 1. Dämpfungsvorrichtungen in Fahrwerken von Fahrzeugen und Luftfahrzeugen weisen eine Komfortfunktion aber insbesondere auch eine sicherheitsrelevante, fahrdynamische Stabilisierungsfunktion auf.

Verschiedene Mängel von Dämpfungsvorrichtungen sind ausschließlich über eine betrieblich nur mit großem Aufwand durchführbare Funktionsprüfung zu erkennen. Bei Sichtprüfungen der Dämpfungsvorrichtungen werden Mängel, Schäden oder Verschleißzustände häufig nicht richtig interpretiert. Ist beispielsweise eine Dämpfungsvorrichtungen äußerlich mit Öl benetzt, so weist dies nicht mit absoluter Sicherheit auf einen Mangel (z.B. eine Undichtheit oder einen Funktionsverlust) hin.

Zur Vermeidung von Sicherheitsrisiken werden Dämpfungsvorrichtungen häufig präventiv getauscht, selbst wenn ihr Zustand einen weiteren Einsatz erlaubt.

Weiterhin sind aus diesem Grund sicherheitskritische Dämpfungsvorrichtungen oftmals redundant ausgeführt, z.B. wird bei Fahrwerken von Hochgeschwindigkeitszügen häufig eine größere Anzahl an Schlingerdämpfern, als in Anbetracht zu erwartender Belastungen nötig, eingesetzt.

Eine genaue Zustandsdetektion von Dämpfungsvorrichtungen im Hinblick auf deren Dämpfungsfunktion, welche insbesondere mittels Kraft-Geschwindigkeitskennlinien definiert ist, sowie auf Mängel, Schäden und Verschleiß etc. ist daher wichtig. Aus dem Stand der Technik ist beispielsweise die EP 0 438 815 B1 bekannt. Darin ist ein adaptiver Schwingungsdämpfersensor offenbart, mittels dessen eine Relativgeschwindigkeit zwischen einem Aufbau und einer Achse eines Fahrzeugs erfasst wird. Der Sensor ist auf einem Dämpfungsrohr eines Schwingungsdämpfers vorgesehen und weist Wicklungen sowie einen Dauermagneten auf. Eine Kolbenstange des Schwingungsdämpfers wird aufgrund von Bodenunebenheiten bewegt, wodurch ein magnetischer Fluss in dem Dauermagneten gestört wird und eine Spannung in die Wicklungen induziert wird. Auf Grundlage dieser Spannung wird die genannte Relativgeschwindigkeit bestimmt und der Schwingungsdämpfer geregelt.

Weiterhin zeigt die EP 0 530 475 B1 einen Relativgeschwindigkeitssensor für einen Schwingungsdämpfer mit einer ferromagnetischen Kolbenstange, welcher einen radial polarisierten Dauermagneten und eine Wicklung, in die eine Spannung induziert wird, aufweist.

Darüber hinaus ist in der EP 1 622 093 B1 eine Vorrichtung zur Überwachung von Fahrzeugdämpfern auf Grundlage von Dämpfer- und Außentemperaturmessungen offenbart. Mittels einer Auswerteelektronik werden aus Dämpfer- und Außentemperaturen Kennwerte gebildet und es wird geprüft, inwieweit diese Kenngrößen von definierten Sollwerten abweichen. Bei entsprechenden Abweichungen wird ein Schadenssignal gebildet und auf einer Anzeigeeinrichtung angezeigt.

Ferner ist die EP 2 036 746 B1 bekannt, in der ein elektronisch steuerbares Aufhängungssystem für ein Fahrzeug offenbart ist. Es ist ein Sensormodul mit einem Beschleunigungssensor und einem Verlagerungssensor vorgesehen. Auf Grundlage von Vergleichen von Beschleunigungsdaten in einem Steuermodul werden Sensorausfälle detektiert.

Weiterhin zeigt die DE 199 34 263 A1 eine Vorrichtung zur funkbasierten Übertragung von Messsignalen von Sensoren an ein Steuergerät bei einem Schwingungsdämpfer. Die Vorrichtung ist mittels Induktion aus einer Relativbewegung zwischen einem Magnet und einer Spule mit Elektrizität versorgt.

Die DE 103 26 675 A1 offenbart eine Steuerungsvorrichtung für ein Fahrwerk eines Kraftfahrzeugs mit einem Sensor, welcher Messsignale drahtlos an ein Steuergerät überträgt. Der Sensor wird batterielos mit Elektrizität versorgt, wofür beispielsweise Induktionsgeber eingesetzt werden.

Die US 2014/175763 A1 beschreibt eine elektronisch geregelte Fahrwerksaufhängung für ein Fahrzeug mit einem Federbein, wobei eine Niveauregulierung vorgesehen ist. In dem Fahrzeug sind hierzu verschiedene Sensoren vorgesehen (z.B. ein Lenkwinkelsensor, ein Raddrehzahlsensor, ein Höhensensor, Beschleunigungssensoren etc.).

Die EP 0 563 713 A2 zeigt ein RFID-basierendes Identifikationssystem.

Der Erfindung liegt die Aufgabe zugrunde, eine gegenüber dem Stand der Technik weiterentwickelte Dämpfungsvorrichtung anzugeben.

Erfindungsgemäß wird diese Aufgabe gelöst mit einer Dämpfungsvorrichtung der eingangs genannten Art, bei der zumindest ein erster Sensor zur Bestimmung kinematischer Größen sowie zumindest eine Funkvorrichtung, welche mit dem zumindest ersten Sensor verbunden ist, und ein zweiter Sensor zur Bestimmung von Kräften, welcher mit der zumindest einen Funkvorrichtung verbunden ist, angeordnet sind, wobei Spannungsdaten und Kraftdaten gespeichert sind, in der Auswerteeinheit aus den Spannungsdaten Geschwindigkeitsdaten gebildet sind und wobei aus den Kraftdaten und den Geschwindigkeitsdaten in der

Auswerteeinheit Kraft-Geschwindigkeitskennlinien erzeugt sind.

Dadurch wird eine laufende Überwachung der Dämpfungsvorrichtung im Hinblick auf mögliche Schäden, Mängel oder unzulässigen Verschleiß etc. erzielt. Zuverlässigkeit und Betriebssicherheit der Dämpfungsvorrichtung werden erhöht.

Weiterhin werden aufgrund der laufenden Überwachung der Dämpfungsvorrichtung eine zustandsorientierte Instandhaltung, eine Verlängerung von Wartungsintervallen und somit eine Reduktion von Lebensdauerkosten ermöglicht.

Eine Anordnung von zusätzlichen Dämpfungsvorrichtungen als Redundanz kann vermieden werden, wodurch eine Kosten- und Gewichtsersparnis bewirkt wird.

Ferner können bei Einsatz der Dämpfungsvorrichtung in einem Fahrwerk eines Schienenfahrzeugs aus Messergebnissen des ersten Sensors neben Informationen über die Dämpfungsvorrichtung selbst auch Informationen über Gleiszustand, Streckenverlauf sowie Beladung des Schienenfahrzeugs gebildet werden.

Weiterhin ermöglicht die Funkvorrichtung eine Datenübertragung von der Dämpfungsvorrichtung an einen Wartungsstand. Dadurch wird eine genaue Ersatzteil-Bedarfsbestimmung erzielt.

Durch diese Maßnahme werden weiterhin Mess- und Auswerteergebnisse des ersten Sensors präzisiert und somit eine genauere Überwachung der Dämpfungsvorrichtung erzielt.

Es ist günstig, wenn der zumindest erste Sensor als Energieversorgungseinheit zumindest für die zumindest eine Funkvorrichtung ausgeführt ist.

Der erste Sensor kann auch als Energieversorgungseinheit für den zweiten Sensor ausgebildet sein.

Durch diese Maßnahme kann auf eine separate Energieversorgungseinheit (z.B. Batterien) für den ersten Sensor, den zweiten Sensor und die Funkvorrichtung verzichtet werden. Dadurch werden Fehleranfälligkeit sowie Bauraumbedarf der Dämpfungsvorrichtung vermindert.

Erfindungsgemäß ist ein als Temperatursensor ausgebildeter dritter Sensor vorgesehen Durch einen Einsatz des zusätzlichen, dritten Sensors werden Schäden, Mängel etc. der Dämpfungsvorrichtung mit besonders großer Genauigkeit detektiert.

Eine günstige Lösung wird erzielt, wenn die zumindest eine Funkvorrichtung in dem Gehäuse angeordnet ist.

Durch diese Maßnahme ist die Funkvorrichtung vor Umgebungseinflüssen (z.B. Partikel, Feuchtigkeit etc.) geschützt.

Nachfolgend wird die Erfindung anhand von Ausführungsbeispielen näher erläutert.

Es zeigen beispielhaft:

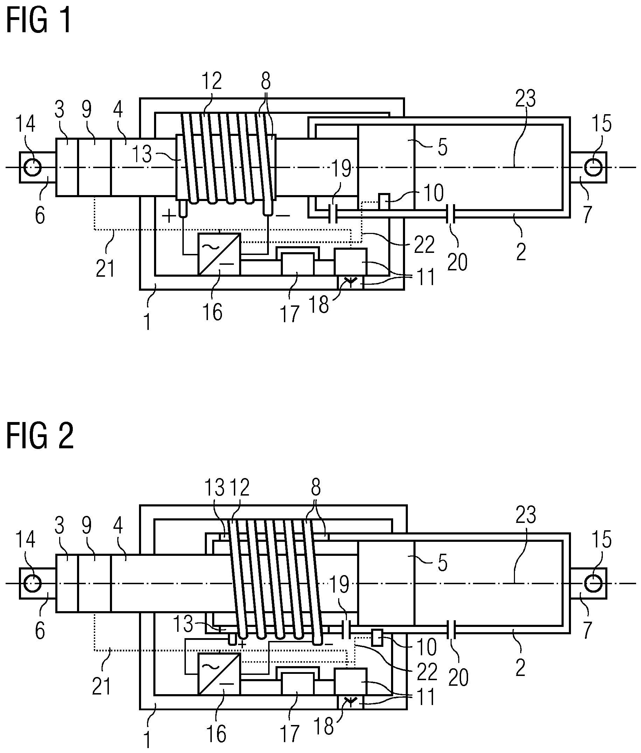

- Fig. 1:: Eine schematische Schnittdarstellung einer ersten beispielhaften Ausführungsvariante einer erfindungsgemäßen Dämpfungsvorrichtung mit einem ersten Sensor, der einen auf einer Kolbenanordnung vorgesehenen Permanentmagneten aufweist, einem zweiten Sensor und einem dritten Sensor sowie einer Funkvorrichtung, und
- Fig. 2:: Eine schematische Schnittdarstellung einer zweiten beispielhaften Ausführungsvariante einer nicht erfindungsgemäßen Dämpfungsvorrichtung mit einem ersten Sensor, der einen auf einem Rohr vorgesehenen Permanentmagneten aufweist, einem zweiten Sensor und einem dritten Sensor sowie einer Funkvorrichtung.

Eine in Fig. 1 gezeigte, erste beispielhafte Ausführungsvariante einer erfindungsgemäßen Dämpfungsvorrichtung weist ein als Schutzrohr ausgeführtes Gehäuse 1, ein Rohr 2, das mit dem Gehäuse 1 gegenüber einer Umgebung abdichtend verbunden ist, sowie eine Kolbenanordnung 3 auf. Die Kolbenanordnung 3 umfasst eine Kolbenstange 4 sowie einen Kolben 5.

Das Gehäuse 1, das Rohr 2, die Kolbenstange 4 sowie der Kolben 5 sind zylindrisch ausgeführt.

Die Dämpfungsvorrichtung umfasst weiterhin eine Befestigungsanordnung, welche eine erste Befestigungsvorrichtung 6 und eine zweite Befestigungsvorrichtung 7 aufweist. Die erste Befestigungsvorrichtung 6, welche mit der Kolbenstange 4 verbunden ist, umfasst eine erste Buchse 14, die zweite Befestigungsvorrichtung 7, welche mit dem Rohr 2 verbunden ist, eine zweite Buchse 15.

Die Dämpfungsvorrichtung ist auf einem nicht dargestellten Schienenfahrzeug mit einem Wagenkasten und einem Fahrwerk, das einen Fahrwerksrahmen aufweist, angeordnet.

Mittels der ersten Buchse 14, eines ersten Bolzens und einer ersten Schraubenverbindung, die nicht dargestellt sind, ist die Dämpfungsvorrichtung mit dem Wagenkasten verbunden. Mittels der zweiten Buchse 15 sowie, ebenfalls nicht dargestellt, eines zweiten Bolzens und einer zweiten Schraubenverbindung ist die Dämpfungsvorrichtung an den Fahrwerksrahmen gekoppelt.

Die Dämpfungsvorrichtung ist als Schlingerdämpfer ausgeführt, deren Dämpfungsfunktion aus dem Stand der Technik bekannt ist.

Erfindungsgemäß ist es jedoch auch vorstellbar, die Dämpfungsvorrichtung als Primärdämpfer oder Sekundärdämpfer etc. des Schienenfahrzeugs auszuführen.

Weiterhin ist es beispielsweise denkbar, die Dämpfungsvorrichtung in einem Bug- oder Hauptfahrwerk eines Luftfahrzeugs oder in einem Federbein eines Kraftfahrzeugs einzusetzen.

Die Kolbenstange 4 ist in dem Gehäuse 1 und in dem Rohr 2 mittels nicht dargestellter Führungselemente geführt bzw. ragt teilweise aus dem Gehäuse 1 und dem Rohr 2 heraus.

Die Kolbenstange 4 kann sich relativ zu dem Gehäuse 1 und dem Rohr 2 bewegen.

Der Kolben 5 ist in dem Rohr 2 geführt. Das Rohr 2 ist mit Hydraulikfluid gefüllt, wobei zur Füllung und zur Entleerung des Rohrs 2 ein erster Anschluss 19 und ein zweiter Anschluss 20 vorgesehen sind. Abhängig von Vorbeiströmwiderständen in dem Rohr 2 werden Kräfte vorwiegend in Richtung einer Längsachse 23 auf den Kolben 5 gebildet und in Abhängigkeit dieser Kräfte eine Dämpfungswirkung der Dämpfungsvorrichtung vorwiegend in Richtung dieser Längsachse 23 eingestellt.

Das Rohr 2 weist ein nicht näher beschriebenes Innenrohr und ein Außenrohr auf, wodurch bei einem Ein- oder Ausfahren der Kolbenstange 4 ein Volumenausgleich des Hydraulikfluides ermöglicht wird.

Das Gehäuse 1 und das Rohr 2 weisen im Kontakt zu der Kolbenstange 4 nicht gezeigte Dichtungen auf, über die ein Eindringen von Fremdkörpern (z.B. Partikel) und Flüssigkeiten sowie, betreffend das Rohr 2, ein Ausdringen von Hydraulikfluid vermieden wird.

Die Dämpfungsvorrichtung weist einen ersten Sensor 8, einen zweiten Sensor 9 und einen dritten Sensor 10 auf.

Der erste Sensor 8 umfasst eine Spule 12, welche mit dem Gehäuse 1 verbunden ist, und einen auf der Kolbenstange 4 angeordneten Permanentmagneten 13.

Erfindungsgemäß ist es auch denkbar, dass die Spule 12 um die Kolbenstange 4 gewickelt bzw. mit dieser verbunden ist und der Permanentmagnet 13 mit dem Gehäuse 1 verbunden ist.

Die Spule 12 ummantelt den Permanentmagneten 13 und ist mit einem an einen Pluspol und einen Minuspol der Spule 12 gekoppelten Gleichrichter 16 verbunden, dieser wiederum mit einem Messverstärker 17 und einer Funkvorrichtung 11, die eine nicht dargestellte Recheneinheit sowie eine Antenne 18 aufweist.

Die Spule 12, der Permanentmagnet 13, der Gleichrichter 16, der Messverstärker 17 sowie die Funkvorrichtung 11 sind in dem Gehäuse 1 angeordnet und somit vor Umgebungseinflüssen (z.B. Partikel, Feuchtigkeit etc.) geschützt.

Dabei handelt es sich um eine günstige Lösung. Erfindungsgemäß ist es jedoch auch vorstellbar, insbesondere die Funkvorrichtung 11 an einer Außenseite der Dämpfungsvorrichtung (beispielsweise an einer Außenseite des Gehäuses 1) anzuordnen.

Weiterhin ist es auch denkbar, dass mehrere Komponenten als nur ein Gehäuse 1 zur Abdeckung bzw. zum Schutz der Dämpfungsvorrichtung vorgesehen sind. Beispielsweise kann der erste Sensor 8 von dem Gehäuse 1 ummantelt sein, während für den zweiten Sensor 9 ein eigenes Sensorgehäuse vorgesehen ist etc.

Bewegt sich die Kolbenstange 4 aufgrund von Relativbewegungen zwischen dem Fahrwerksrahmen und dem Wagenkasten und somit der Permanentmagnet 13 relativ zu der Spule 12, so wird eine Spannung in die Spule 12 induziert, mit welcher der Messverstärker 17 sowie die Funkvorrichtung 11 mit elektrischer Energie versorgt werden. Weiterhin werden entsprechende Spannungssignale des ersten Sensors 8 mittels des Messverstärkers 17 verstärkt und in der Funkvorrichtung 11 als Spannungsdaten gespeichert, welche als Spannungsdatensatz über die Antenne 18 an einen nicht gezeigten Wartungsstand gesendet werden.

Weiterhin werden über einen ersten Leitungsweg 21 der zweite Sensor 9 sowie über einen zweiten Leitungsweg 22 der dritte Sensor 10 mit elektrischer Energie versorgt bzw. aktiviert.

Der erste Sensor 8 fungiert demnach als Energieversorgungseinheit für den Messverstärker 17, die Funkvorrichtung 11 sowie den zweiten Sensor 9 und den dritten Sensor 10.

Der erste Leitungsweg 21 und der zweite Leitungsweg 22 sind schematisch dargestellt und als Kabeln ausgeführt.

Der zweite Sensor 9 ist als Kraftaufnehmer bzw. als aus dem Stand der Technik bekannte Kraftmessdose ausgeführt, mit der Kolbenstange 4 verbunden und misst in der Kolbenstange 4 wirkende Kräfte.

Erfindungsgemäß ist es auch denkbar, dass der Kraftaufnehmer als Piezo-Kraftaufnehmer oder als Dehnungsmessstreifen (DMS) ausgeführt ist. Weiterhin ist es vorstellbar, dass der Kraftaufnehmer auf der ersten Befestigungsvorrichtung 6 oder auf der zweiten Befestigungsvorrichtung 7 vorgesehen ist.

Entsprechende Kraftsignale werden über den ersten Leitungsweg 21 an die Funkvorrichtung 11 übermittelt, in deren Recheneinheit als Kraftdaten gespeichert und über deren Antenne 18 als Kraftdatensatz an den Wartungsstand gesendet.

Der dritte Sensor 10 ist als aus dem Stand der Technik bekannter Temperatursensor mit Schleifkontakt ausgeführt, in dem Kolben 5 angeordnet und misst Kontakttemperaturen zwischen dem Rohr 2 und dem Kolben 5.

Erfindungsgemäß ist es auch denkbar, dass der dritte Sensor 10 keinen Schleifkontakt aufweist, d.h. keine Kontakttemperaturen zwischen dem Rohr 2 und dem Kolben 5, sondern Bauteiltemperaturen des Kolbens 5 misst.

Weiterhin ist es vorstellbar, dass der dritte Sensor 10 anstatt in dem Kolben 5 auf dem Rohr 2 angeordnet ist und Temperaturen des Rohrs 2 misst.

Entsprechende Temperatursignale werden über den zweiten Leitungsweg 22 an die Funkvorrichtung 11 übermittelt, in deren Recheneinheit als Temperaturdaten gespeichert und als Temperaturdatensatz über die Antenne 18 an den Wartungsstand übertragen.

Die Funkvorrichtung 11 ist als aus dem Stand der Technik bekannte Radio-Frequency Identification (RFID)-Funkvorrichtung ausgebildet.

Dabei handelt es sich um eine günstige Lösung.

Nicht erfindungsgemäß ist es vorstellbar, die Funkvorrichtung als aus dem Stand der Technik bekannte Low-Power-Funkvorrichtung auszuführen.

Der Wartungsstand weist ein entsprechendes RFID-Lesegerät auf, das bei Vorbeifahrt des Schienenfahrzeugs den Spannungsdatensatz, den Kraftdatensatz sowie den Temperaturdatensatz empfängt.

Der Wartungsstand weist eine Auswerteeinheit auf, in dem der Spannungsdatensatz, der Kraftdatensatz und der Temperaturdatensatz zur Detektion von Schäden, Mängeln und unzulässigem Verschleiß der Dämpfungsvorrichtung ausgewertet werden. Aus den Spannungsdaten werden über eine Proportionalitätsbeziehung zwischen der Spannung und einer Relativgeschwindigkeit zwischen dem Permanentmagneten 13 und der Spule 12 Geschwindigkeitsdaten gebildet, d.h. es wird mittels des ersten Sensors 8 eine kinematische Größe bzw. eine Geschwindigkeit bestimmt.

Aus den Kraftdaten und den Geschwindigkeitsdaten werden Kraft-Geschwindigkeitskennlinien erzeugt, welche mit einer definierten Soll-Kennlinie verglichen werden. Wird auf Grundlage dieses Vergleichs eine Abweichung außerhalb einer festgelegten Toleranz festgestellt und weisen auch zeitlich mit den Spannungs- bzw. Geschwindigkeitsdaten korrelierende Temperaturdaten Abweichungen über einen festgelegten Temperaturgrenzwert auf, so wird ein Warnhinweis erzeugt, der auf einer Anzeigeeinrichtung des Wartungsstands optisch angezeigt wird. Auf Grundlage dieses Warnhinweises kann eine Ersatzteilbeschaffung bzw. Ersatzteilbereitstellung und ein Tausch der Dämpfungsvorrichtung oder eine Reparatur der Dämpfungsvorrichtung in dem Wartungsstand erfolgen.

Nicht erfindungsgemäß ist es möglich, auf den dritten Sensor 10 sowie den zweiten Leitungsweg 22 zu verzichten und die Dämpfungsvorrichtung ausschließlich auf Grundlage von Spannungs- und Kraftmessungen zu überwachen.

Ferner nicht erfindungsgemäß ist es möglich, auf den zweiten Sensor 9 sowie den ersten Leitungsweg 21 zu verzichten und die Dämpfungsvorrichtung ausschließlich auf Grundlage von Spannungs- und Temperaturmessungen bzw. auf Grundlage von Geschwindigkeits-Temperaturkennlinien zu überwachen.

Es ist ebenfalls nicht erfindungsgemäß möglich, eine Überwachung allein auf Grundlage des ersten Sensors 8 bzw. auf Basis von Geschwindigkeitssignalen und Geschwindigkeitskennlinien durchzuführen.

Weiterhin nicht erfindungsgemäß ist es möglich, aus dem Stand der Technik bekannte Hydraulik-Drucksensoren in dem Rohr 2 vorzusehen, diese über weitere Leitungswege mit dem Gleichrichter 16 und der Funkvorrichtung 11 zu verbinden, aus entsprechenden Messungen Hydraulik-Drucksignale an die Funkvorrichtung 11 zu übermitteln, diese in deren Recheneinheit als Hydraulik-Druckdaten zu speichern und als Hydraulik-Druckdatensätze über die Antenne 18 an den Wartungsstand zu übertragen und dort im Hinblick auf eine Bildung von Warnhinweisen auszuwerten. Unterschreiten beispielsweise Hydraulik-Druckdaten einen festgelegten Druckgrenzwert, so wird eine Undichtheit oder ein Funktionsverlust, beispielsweise aufgrund von Beschädigungen oder Verschleiß, der Dämpfungsvorrichtung detektiert.

Weiterhin können in der Auswerteeinheit des Wartungsstands aus den Geschwindigkeitsdaten mittels zeitlicher Differentiation Beschleunigungsdaten und mittels zeitlicher Integration Wegdaten gebildet werden, d.h. mittels des ersten Sensors 8 weitere kinematische Größen, nämlich Beschleunigungen und Wege, bestimmt werden.

Aus den Beschleunigungsdaten können Informationen in Bezug auf Gleiszustände gebildet werden und aus den Wegdaten Informationen zu Streckenverläufen, Häufigkeiten von Bögen, Beladungszuständen des Schienenfahrzeugs etc. Diese Informationen können in die Detektion von Schäden, Mängeln und unzulässigem Verschleiß der Dämpfungsvorrichtung eingesetzt werden.

Fig. 2 zeigt eine zweite beispielhafte Ausführungsvariante einer nicht erfindungsgemäßen Dämpfungsvorrichtung für ein Schienenfahrzeug mit einem Fahrwerk und einem Wagenkasten. Diese ist hinsichtlich konstruktiver und funktionaler Eigenschaften weitgehend gleich wie jene in Fig. 1 gezeigte, erste beispielhafte Dämpfungsvorrichtung ausgeführt. Es werden daher gleiche Bezugszeichen verwendet.

Im Unterschied zu der in Fig. 1 gezeigten Ausführungsvariante ist ein Permanentmagnet 13 eines ersten Sensors 8 auf einem mit Hydraulikfluid gefüllten Rohr 2, das einen ersten Anschluss 19 und einen zweiten Anschluss 20 aufweist, angeordnet. Das Rohr 2 ist in einem Gehäuse 1 bzw. aus diesem heraus geführt und kann sich relativ zu diesem, entlang einer Längsachse 23 bewegen. Zwischen dem Gehäuse 1 und dem Rohr 2 sowie zwischen dem Rohr 2 und der Kolbenstange 4 sind nicht dargestellte Dichtungen und Führungselemente angeordnet.

In dem Gehäuse 1 sind eine Spule 12, ein Gleichrichter 16, ein Messverstärker 17 sowie eine Funkvorrichtung 11 mit einer Antenne 18 angeordnet.

Bewegt sich das Rohr 2 aufgrund von Relativbewegungen zwischen dem Fahrwerk und dem Wagenkasten und somit der Permanentmagnet 13 relativ zu der Spule 12, so wird eine Spannung in die Spule 12 induziert, mit welcher der Messverstärker 17 sowie die Funkvorrichtung 11 mit elektrischer Energie versorgt werden. Weiterhin werden entsprechende Spannungssignale des ersten Sensors 8 mittels des Messverstärkers 17 verstärkt und in der Funkvorrichtung 11 als Spannungsdaten gespeichert, welche als Spannungsdatensatz über die Antenne 18 an einen nicht gezeigten Wartungsstand gesendet werden.

Es ist weiterhin ein dritter Sensor 10 vorgesehen, welcher Bauteiltemperaturen des Rohrs 2 misst.

Eine Kolbenanordnung 3 umfasst eine Kolbenstange 4 mit einem als Kraftsensor ausgeführten zweiten Sensor 9 und einen Kolben 5. Mit der Kolbenstange 4 ist eine erste Befestigungsvorrichtung 6, die eine erste Buchse 14 aufweist, verbunden. Die Kolbenanordnung 3 ist fest mit Gehäuse 1 verbunden und bezüglich einer Umgebung abgedichtet.

Der Kolben 5 verfährt in dem Rohr 2. Mit dem Rohr 2 ist eine zweite Befestigungsvorrichtung 7, welche eine zweite Buchse 15 aufweist, verbunden.

Zur Energieversorgung und zur Signalübertragung im Hinblick auf eine Überwachung der Dämpfungsvorrichtung ist der zweite Sensor 9 über einen ersten Leitungsweg 21 sowie der dritte Sensor 10 über einen zweiten Leitungsweg 22 mit der Funkvorrichtung 11 und dem Gleichrichter 16 verbunden.

Nicht erfindungsgemäß ist es denkbar, dass die Spule 12 um das Rohr 2 gewickelt bzw. mit dieser verbunden ist und der Permanentmagnet 13 mit dem Gehäuse 1 verbunden ist.

### Liste der Bezeichnungen

- 1: Gehäuse
- 2: Rohr
- 3: Kolbenanordnung
- 4: Kolbenstange
- 5: Kolben
- 6: Erste Befestigungsvorrichtung
- 7: Zweite Befestigungsvorrichtung
- 8: Erster Sensor
- 9: Zweiter Sensor
- 10: Dritter Sensor
- 11: Funkvorrichtung
- 12: Spule
- 13: Permanentmagnet
- 14: Erste Buchse
- 15: Zweite Buchse
- 16: Gleichrichter
- 17: Messverstärker
- 18: Antenne
- 19: Erster Anschluss
- 20: Zweiter Anschluss
- 21: Erster Leitungsweg
- 22: Zweiter Leitungsweg
- 23: Längsachse

## Patentansprüche

1. Dämpfungsvorrichtung und Wartungsstand mit Auswerteeinheit, in der ein Spannungsdatensatz, ein Kraftdatensatz und ein Temperaturdatensatz zur Detektion von Schäden, Mängeln und unzulässigem Verschleiß der Dämpfungsvorrichtung ausgewertet werden, für Schienenfahrzeuge mit zumindest einem Fahrwerk, wobei die Dämpfungsvorrichtung zumindest ein Gehäuse, ein Rohr, eine Kolbenanordnung mit zumindest einer Kolbenstange und zumindest einem Kolben sowie eine Befestigungsanordnung mit zumindest einer ersten Befestigungsvorrichtung und einer zweiten Befestigungsvorrichtung umfasst, **dadurch gekennzeichnet,**
**dass** zumindest ein erster Sensor (8) zur Bestimmung kinematischer Größen, welcher eine Spule (12) und einen Permanentmagneten (13) aufweist, wobei die Spule (12) mit dem Gehäuse (1) verbunden und der Permanentmagnet (13) auf der Kolbenstange (4) angeordnet ist oder die Spule (12) um die Kolbenstange (4) gewickelt oder mit dieser verbunden und der Permanentmagnet (13) mit dem Gehäuse (1) verbunden ist, sowie zumindest eine Funkvorrichtung (11), welche mit dem zumindest ersten Sensor (8) verbunden ist, ein als Kraftaufnehmer oder Kraftmessdose ausgeführter und mit der Kolbenstange (4) verbundener zweiter Sensor (9) zur Bestimmung von Kräften, welcher in der Kolbenstange (4) wirkende Kräfte misst und mit der zumindest einen Funkvorrichtung (11) verbunden ist, und ein als Temperatursensor ausgebildeter dritter Sensor (10), der Kontakttemperaturen zwischen dem Rohr (2) und dem Kolben (5) oder Bauteiltemperaturen des Kolbens (5) oder Temperaturen des Rohrs (2) misst, angeordnet sind, wobei die zumindest eine Funkvorrichtung (11) als RFID-Funkvorrichtung ausgeführt ist, wobei der Wartungsstand ein entsprechendes RFID-Lesegerät aufweist, das bei Vorbeifahrt eines Schienenfahrzeugs den Spannungsdatensatz, den Kraftdatensatz sowie den Temperaturdatensatz empfängt, wobei Spannungsdaten gespeichert sind, wobei über einen ersten Leitungsweg (21) an die Funkvorrichtung (11) übermittelte Kraftsignale in deren Recheneinheit als Kraftdaten gespeichert und über deren Antenne (18) als Kraftdatensatz an den Wartungsstand gesendet sind, in der Auswerteeinheit aus den Spannungsdaten über eine Proportionalitätsbeziehung zwischen einer Spannung und einer Relativgeschwindigkeit zwischen dem Permanentmagneten (13) und der Spule (12) Geschwindigkeitsdaten gebildet sind und wobei aus den Kraftdaten und den Geschwindigkeitsdaten in der Auswerteeinheit Kraft-Geschwindigkeitskennlinien erzeugt sind , welche mit einer definierten Soll-Kennlinie verglichen werden, wobei wenn auf Grundlage dieses Vergleichs eine Abweichung außerhalb einer festgelegten Toleranz festgestellt wird und auch zeitlich mit den Spannungs- bzw. Geschwindigkeitsdaten korrelierende Temperaturdaten Abweichungen über einen festgelegten Temperaturgrenzwert aufweisen, so wird ein Warnhinweis erzeugt, der auf einer Anzeigeeinrichtung des Wartungsstands optisch angezeigt wird.

2. Vorrichtung nach Anspruch 1, **dadurch gekennzeichnet, dass** der zumindest erste Sensor (8) als Energieversorgungseinheit zumindest für die zumindest eine Funkvorrichtung (11) ausgeführt ist.

3. Vorrichtung nach Anspruch 1 oder 2, **dadurch gekennzeichnet, dass** der zumindest erste Sensor (8) als Energieversorgungseinheit für den zweiten Sensor (9) ausgeführt ist.

4. Vorrichtung nach einem der Ansprüche 1 bis 3, **dadurch**
**gekennzeichnet, dass** der zweite Sensor (9) mit der Befestigungsanordnung verbunden ist.

5. Vorrichtung nach einem der Ansprüche 1 bis 4, **dadurch**
**gekennzeichnet, dass** der dritte Sensor (10) mit der Kolbenanordnung (3) verbunden ist.

6. Vorrichtung nach einem der Ansprüche 1 bis 5, **dadurch**
**gekennzeichnet, dass** der dritte Sensor (10) mit dem Rohr (2) verbunden ist.

7. Vorrichtung nach einem der Ansprüche 1 bis 6 , **dadurch gekennzeichnet, dass** die zumindest eine Funkvorrichtung (11) in dem Gehäuse (1) angeordnet ist.

## Claims

1. Damping device and maintenance station with an evaluation unit, in which a voltage data set, a force data set and a temperature data set are evaluated for the purpose of detecting damage, defects and impermissible wear of the damping device, for rail vehicles having at least one chassis, wherein the damping device comprises at least a housing, a tube, a piston arrangement having at least one piston rod and at least one piston and a fastening arrangement having at least a first fastening device and a second fastening device, **characterized in that** at least a first sensor (8) for determining kinematic variables, which has a coil (12) and a permanent magnet (13), wherein the coil (12) is connected to the housing (1) and the permanent magnet (13) is arranged on the piston rod (4) or the coil (12) is wound around the piston rod (4) or is connected to the latter and the permanent magnet (13) is connected to the housing (1), and at least one radio device (11) which is connected to the at least first sensor (8), a second sensor (9) which is in the form of a force transducer or a load cell and is connected to the piston rod (4) and is intended to determine forces and measures forces acting in the piston rod (4) and is connected to the at least one radio device (11), and a third sensor (10) which is in the form of a temperature sensor and measures contact temperatures between the tube (2) and the piston (5) or component temperatures of the piston (5) or temperatures of the tube (2), are arranged, wherein the at least one radio device (11) is in the form of an RFID radio device, wherein the maintenance station has a corresponding RFID reader which receives the voltage data set, the force data set and the temperature data set as a rail vehicle moves past, wherein voltage data are stored, wherein force signals transmitted to the radio device (11) via a first line path (21) are stored as force data in the computing unit of the radio device and are transmitted to the maintenance station as a force data set via the antenna (18) of the radio device, speed data are formed in the evaluation unit from the voltage data using a proportionality relationship between a voltage and a relative speed between the permanent magnet (13) and the coil (12), and wherein force/speed characteristic curves are generated from the force data and the speed data in the evaluation unit and are compared with a defined desired characteristic curve, wherein, if a deviation outside a specified tolerance is determined on the basis of this comparison and temperature data which correlate to the voltage and/or speed data in terms of time also have deviations above a specified temperature limit value, a warning is generated and is optically displayed on a display apparatus of the maintenance station.

2. Device according to Claim 1, **characterized in that** the at least first sensor (8) is in the form of an energy supply unit at least for the at least one radio device (11).

3. Device according to Claim 1 or 2, **characterized in that** the at least first sensor (8) is in the form of an energy supply unit for the second sensor (9).

4. Device according to one of Claims 1 to 3, **characterized in that** the second sensor (9) is connected to the fastening arrangement.

5. Device according to one of Claims 1 to 4, **characterized in that** the third sensor (10) is connected to the piston arrangement (3).

6. Device according to one of Claims 1 to 5, **characterized in that** the third sensor (10) is connected to the tube (2).

7. Device according to one of Claims 1 to 6, **characterized in that** the at least one radio device (11) is arranged in the housing (1).

## Revendications

1. Dispositif d'amortissement et stand de maintenance comprenant une unité d'analyse, dans laquelle sont analysés un ensemble de données relatives à la tension, un ensemble de données motrices et un ensemble de données de température destinés à la détection de sinistres, de défectuosités et d'une usure irrégulière du dispositif d'amortissement, pour véhicules sur rail comprenant au moins une suspension, le dispositif d'amortissement comprenant au moins un carter, un tube, un arrangement de pistons comprenant au moins une tige de piston et au moins un piston ainsi qu'un arrangement de fixation comprenant au moins un premier dispositif de fixation et un deuxième dispositif de fixation, **caractérisé en ce que** s'y trouvent au moins un premier détecteur (8), qui détermine des grandeurs cinématiques, lequel comporte une bobine (12) et un aimant permanent (13), la bobine (12) étant raccordée au carter (1) et l'aimant permanent (13) se trouvant sur la tige de piston (4) ou la bobine (12) étant enroulée autour de la tige de piston (4) ou étant raccordée à celle-ci et l'aimant permanent (13) étant raccordé au carter (1), ainsi qu'au moins un appareil radio (11), lequel est raccordé au au moins un premier détecteur (8), un deuxième détecteur (9), déterminant des forces, réalisé en tant qu'enregistreur de forces ou sous la forme d'un boitier mesurant les forces et raccordé à la tige de piston (4), lequel mesure les forces agissant dans la tige de piston (4) et auquel le au moins un appareil radio (11) est raccordé, et un troisième détecteur (10) réalisé en tant que détecteur de température, lequel mesure les températures de contact entre le tube (2) et le piston (5) ou les températures des constituants du piston (5) ou les températures du tube (2), le au moins un appareil radio (11) étant réalisé en tant qu'appareil radio RFID, le stand de maintenance comprenant un appareil de lecture RFID correspondant, lequel reçoit, pendant le trajet d'un véhicule sur rail, l'ensemble de données relatives à la tension, l'ensemble de données motrices ainsi que l'ensemble de données température, les données relatives à la tension étant mémorisées, les signaux moteurs transmis par le biais d'une première voie d'acheminement (21) à l'appareil radio (11) étant mémorisés dans l'unité de calcul de celui-ci en tant que données motrices, et étant envoyées au stand de maintenance par l'antenne (18) de celui-ci en tant qu'ensemble des données motrices, les données de vitesses étant formées dans l'unité d'analyse à partir des données relatives à la tension par une relation de proportionnalité entre une tension et une vitesse relative entre l'aimant permanent (13) et la bobine (12) et des courbes caractéristiques moteur-vitesse étant produites à partir des données motrices et des données vitesse dans l'unité d'analyse, lesquelles sont comparées avec une courbe caractéristique théorique définie, dans lequel, si, sur base de cette comparaison, un écart est constaté qui sort d'une tolérance fixée, et également que des données de température en corrélation temporelle avec les données de tension ou de vitesse présentent aussi des écarts supérieurs à une valeur limite de température fixée, alors une indication d'alerte est produite, laquelle s'affiche visuellement sur l'afficheur du stand de maintenance.

2. Dispositif selon la revendication 1, **caractérisé en ce que** le au moins premier détecteur (8) est réalisé en tant qu'unité d'alimentation en énergie au moins pour le au moins un appareil radio (11).

3. Dispositif selon la revendication 1 ou 2, **caractérisé en ce que** le au moins premier détecteur (8) est réalisé en tant qu'unité d'alimentation en énergie pour le deuxième détecteur (9).

4. Dispositif selon l'une des revendications 1 à 3, **caractérisé en ce que** le deuxième détecteur (9) est raccordé à l'arrangement de fixation.

5. Dispositif selon l'une des revendications 1 à 4, **caractérisé en ce que** le troisième détecteur (10) est raccordé à l'arrangement de piston (3).

6. Dispositif selon l'une des revendications 1 à 5, **caractérisé en ce que** le troisième détecteur (10) est raccordé au tube (2).

7. Dispositif selon l'une des revendications 1 à 6, **caractérisé en ce que** le au moins un appareil radio (11) se trouve dans le carter (1).
